# EUROPÄISCHE PATENTSCHRIFT

(11) **EP 1 255 953 B1**
(45) Veröffentlichungstag und Bekanntmachung des Hinweises auf die Patenterteilung: **28.06.2006**
(21) Anmeldenummer: 01909752.6
(22) Anmeldetag: 15.02.2001
(51) Int. Cl.: F24J 2/07

(54) **HOCHTEMPERATUR-SOLARABSORBER**
HIGH-TEMPERATURE SOLAR ABSORBER
ABSORBEUR SOLAIRE HAUTE TEMPERATURE

(30) Priorität: 19.02.2000 DE 10007648
(43) Veröffentlichungstag der Anmeldung: 13.11.2002
(73) Patentinhaber: Deutsches Zentrum für Luft- und Raumfahrt e.V., 51147 Köln (DE)
(72) Erfinder: HOFFSCHMIDT, Bernhard, 51467 Bergisch Gladbach (DE); RIETBROCK, Peter, 51147 Köln (DE); PITZ-PAAL, Robert, 53840 Troisdorf (DE); KRöDEL, Matthias, 85521 Ottobrunn (DE)
(74) Vertreter: Selting, Günther
(86) Internationale Anmeldenummer: PCT/EP2001/001652
(87) Internationale Veröffentlichungsnummer: WO 2001/061254

(56) Entgegenhaltungen:
- WO-A-97/11321
- DE-A- 3 042 557
- DE-A- 4 011 233
- DE-A- 19 744 541
- FR-A- 2 515 169
- US-A- 4 135 367

## Beschreibung

Die Erfindung betrifft ein Hochtemperatur-Solarabsorbermodul für die Absorption von hochkonzentrierter solarer Strahlung zur Erwärmung eines unter Druck stehenden vornehmlich gasförmigen Fluids sowie einen Hochtemperatur Solarabsorber mit mehreren Solchen HT-Solarabsorbermodulen.

Es gibt im wesentlichen zwei Varianten von druckbeaufschlagten Solarabsorbern zum Betrieb einer Gasturbine. Bei der einen Variante handelt es sich um einen Rohrreceiver, bei dem ein Rohr von einem gasförmigen Fluid durchströmt wird. Das Rohr wird auf der Außenseite mit konzentrierter Strahlung beaufschlagt, wodurch das Rohr und dadurch auch das in dem Rohr strömende Fluid erhitzt wird. Mit diesem System können nur relativ niedrige mittlere Strahlungsdichten erreicht werden.

Die zweite Variante ist ein geschlossener volumetrischer Receiver, der eine tiegelförmige Absörberwand aufweist, welche hinter einem aus Quarzglas bestehenden, ebenfalls tiegelförmigen Fenster angeordnet ist. In den Raum zwischen Absorberwand und Fenster wird ein Gas eingeleitet, das durch die poröse Absorberwand hindurchgedrückt und dabei konvektiv aufgeheizt wird. Die Absorption der Strahlung und der Wärmeübergang an das Gas erfolgen mit einem sehr hohen Wirkungsgrad. Hierbei können weit höhere Strahlungsdichten erreicht werden als beim Rohrreceiver. Das kritische Bauteil des geschlossenen volumetrischen Receivers ist jedoch das aus Quarzglas bestehende Fenster, welches beim Betrieb gekühlt werden muss. Um die Flanschbereiche des Fensters gegen Bestrahlung und Überhitzung zu schützen, ist ein Sekundärkonzentrator in Form eines vorgesetzten Parabolreflektors erforderlich, der den Randbereich des Receivers abschattet.

Der geschlossene volumetrische Receiver ist aus exergetischer Sicht nach dem Stand des Wissens das Optimum. Der technische Aufwand ist aber sehr hoch und erfordert komplexe Regel- und Kontrolleinrichtungen. Das schwächste Glied stellt dabei das Fenster dar. Das Quarzglas muss vor Verunreinigungen geschützt und gekühlt werden. In den bisherigen Ausführungen erfordert der vorgesetzte Sekundärkonzentrator einen eigenen. Kühlkreislauf. Kritisch ist außerdem der eingeschränkte Akzeptanzwinkel. Dieser stellt eine erhöhte Anforderungen an die Geometrie des Heliostatfeldes, das die Sonnenenergie auf den Solarabsorber lenkt.

In dem US-Patent 4 452 232 ist ein Hochtemperatur-Solarabsorber beschrieben, bei dem die Absorberwand generell tiegelförmig ausgebildet ist, wobei der Tiegelboden als aufragender Kegel ausgebildet ist. Die Absorberwand ist mit Fluidleitungen versehen, die am Scheitelpunkt des Kegels beginnen und von dort radial nach außen verlaufen. Durch die Fluidleitungen strömt ein kühlendes Fluid zum Abführen der Wärme von der Absorberwand. Jeder Solarabsorber ist in einer Öffnung eines auf einem Turm angeordneten Empfängerkopfes enthalten. Auf diese Öffnung sind zahlreiche in einem Heliostatfeld angeordnete Reflektoren gerichtet. Die Reflektoren werden dem Sonnenstand nachgeführt. Sie müssen sehr genau auf den jeweiligen Solarabsorber ausgerichtet sein, weil anderenfalls das Material des Empfängerkopfes getroffen würde, das bei der intensiven Strahlungsbeaüfschlagung zerstört würde.

Ein Hochtemperatur-Solarabsorbermodul, der die gegenständlichen Merkmale des Oberbegriffs des Patentanspruchs 1 aufweist, ist beschrieben in FR-A-2 515 169. Dieser Absorber weist ein becherförmiges Außenteil und ein ebenfalls becherförmiges Innenteil auf, zwischen denen ein ringförmiger Hohlraum gebildet ist, durch den das zum Wärmeaustausch dienende Gas strömen kann. Der Hohlraum kann eine Kanalstruktur enthalten. Das Innenteil dient dem Einfangen der solaren Strahlungsenergie. Das Außenteil bildet über die gesamte Länge des Absorbers eine relativ dicke Tragwand.

Der vorliegenden Erfindung liegt die Aufgabe zugrunde, einen Hochtemperatur-Solarabsorbermodul mit vergrößerter Absorptionsfläche sowie einen Hochtemperatur-Solarabsorber mit mehreren Solcher HT-Solarabsorbermodulen zu schaffen.

Die Lösung dieser Aufgabe erfolgt erfindungsgemäß mit den im Patentanspruch 1 angegebenen Merkmalen. Hiernach ist mindestens ein Teil der zum Tiegeläußeren gerichteten Außenfläche der Absorberwand unbedeckt und einer schräg zur Tiegelachse einfallenden Strahlung ausgesetzt. Dies ermöglicht es, dass der Solarabsorber nicht nur Strahlung aus dem tiegelförmigen Innenbereich absorbiert, sondern auch Strahlung, die auf die Außenfläche der Absorberwand fällt. Die Absorberwand ist an ihrer Innenseite und an ihrer Außenseite so ausgebildet, dass sie einer äußerst energiestarken Solarstrahlung standhält. Der Solarabsorber wird nicht in einem Fenster einer Wand angeordnet, sondern ohne äußere Abschirmung gehalten, so dass die Solarstrahlung einerseits in das innere des Solarabsorbermoduls einfallen kann, zum anderen aber auch ein Teil der Strahlung auf die Außenfläche gelangen kann.

Erfindungsgemäß ist vorgesehen, dass die Absorberwand eine Tragwand, eine dem Tiegelinneren zugewandte Innenwand und eine mindestens einen Teil der Tragwand bedeckende Außenwand aufweist. Die Innenwand und die Außenwand haben jeweils eine geringere Stärke als die Tragwand. Sie dienen als Absorptionswände.

Die Erfindung ermöglicht es, mehrere Solarabsorbermodule in einer gemeinsamen Fläche anzuordnen, wobei zwischen den Solarabsorbermodulen Lücken vorhanden sind. Obwohl ein Teil der einfallenden Strahlung in die Lücken gelangt, wird sie dennoch von den Solarabsorbermodulen aufgefangen. Es kann also eine ganze Fläche lückenlos für die Absorption von Solarstrahlung benutzt werden, obwohl die einzelnen Solarabsorbermodule geometrisch keine geschlossene Fläche bilden.

Das Hochtemperatur-Solarabsorbemodul kann aus einem einzigen Bauteil ausschließlich aus Hochtemperaturkeramik bestehen. Damit verringert sich die Gefahr von Brüchen und Beschädigungen. Da nur ein einziges Material verwendet wird, ist die Herstellung kostengünstig. Materialspannungen infolge unterschiedlicher Wärmeausdehnungskoeffizienten werden vermieden. Dadurch, dass das Solarabsorbermodul zusätzlich, aus Hochtemperaturkeramik besteht, ist eine Kühlung nicht erforderlich.

Die Kanalstruktur und/oder der Auslass können eine Porenstruktur enthalten. Vorzugsweise ist die Porenstruktur einstückig mit der Absorberwand aus einer hochtemperaturbeständigen Keramik hergestellt, insbesondere aus Silizium-Karbid, z.B. C/SiC. Die Porenstruktur besteht vorzugsweise aus einer Schaumkeramik aus demselben Material wie die Absorberwand. Eine derartige Porenstruktur verbessert den Wärmeübergang von der Absorberwand in die die Kanalstruktur durchströmende Luft. Es erfolgt eine gute Wärmeleitung aus der massiven Wand in die Porenstruktur hinein. Der Wärmeübergang von einer Porenstruktur in das Gas ist viel besser als im Falle von Rippen.

Der Solarabsorber kann in unabhängige Absorbermodule unterteilt sein, die sowohl in Serie als auch parallel geschaltet werden können. Die Absorbermodule können unter einem Winkel zur Einstrahlungsrichtung schräggestellt werden, so dass ein Teil der Strahlung auf die Außenwände trifft. Die Module können mit gegenseitigen Abständen angeordnet werden, so dass sie sich nicht berühren. Dadurch wird eine einfache Zugänglichkeit für Wartungsarbeiten und Austausch einzelner Module ermöglicht. Die Module sind vorzugsweise rotationssymmetrisch, können jedoch auch elliptisch oder polygonförmig ausgeführt sein..Der Begriff tiegelförmig umfasst jegliche konvexe Struktur, in der einfallende Strahlung wie in einer Falle gefangen wird.

Die Kanalstruktur kann einen Verteilerkanal enthalten, von dem mehrere Kanäle abgehen, welche im Innern der Absorberwand um die Tiegelachse herum umlaufen. Der Übergang von dem Verteilerkanal auf die einzelnen Kanäle kann an beliebiger Stelle liegen. So können beispielsweise schraubenförmige Kanäle an der Außenseite der Absorberwand entlanglaufen und sich in schraubenförmigen Kanälen an der Innenseite der Absorberwand fortsetzen. An der Verzweigungsstelle zwischen dem Verteilerkanal und den einzelnen Kanälen befinden sich in den Kanälen Blendenöffnungen oder Drosselstellen. Auf diese Weise wird erreicht, dass alle Kanäle etwa den gleichen Strömungswiderstand haben und dass die Luftströmung sich gleichmäßig auf alle Kanäle verteilt.

Vorteilhafte Ausgestaltungen und Weiterbildungen der Erfindung sind den Unteransprüchen sowie der nachfolgenden Beschreibung der Figuren zu entnehmen.

Im folgenden werden unter Bezugnahme auf die Zeichnungen Ausführungsbeispiele der Erfindung näher erläutert.

Es zeigen:
- Fig. 1: einen Längsschnitt durch eine erste Ausführungsform des Hochtemperatur-Solarabsorbers,
- Fig. 2: einen halben Längsschnitt durch eine zweite Ausführungsform,
- Fig. 3: einen Längsschnitt durch eine dritte Ausführungsform,
- Fig. 4: einen halben Längsschnitt durch eine vierte Ausführungsform,
- Fig. 5: einen halben Längsschnitt durch eine fünfte Ausführungsform,
- Fig. 6: eine Seitenansicht eines aus zahlreichen Absorbermodulen bestehenden Absorberfeldes,
- Fig. 7: eine Frontansicht des Absorberfeldes von Fig. 6 aus Richtung des Pfeiles VII, und
- Fig. 8: eine Frontansicht eines Absorberfeldes mit sechseckigen Absorbermodulen.

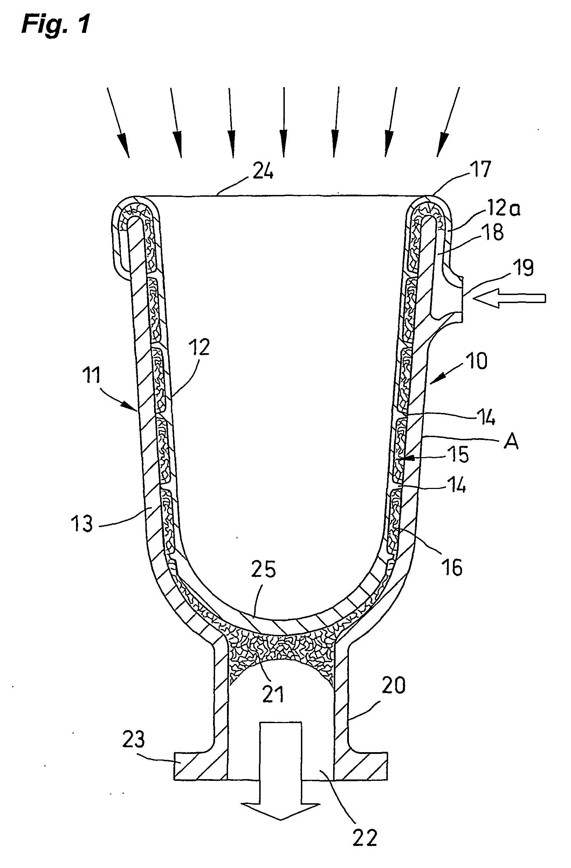

In Figur 1 ist ein Absobermodul 10 dargestellt, das mit zahlreichen gleichartigen Modulen zu einem Absorberfeld zusammengesetzt werden kann. Das Absorbermodul weist eine tiegelförmige Absorberwand 11 auf, die doppelwandig ist und aus einer Innenwand 12 und einer hierzu parallelen Tragwand 13 besteht. Die Innenwand 12 hat eine Materialstärke, die deutlich geringer ist als diejenige der Tragwand 13.

Die Innenwand 12 wird durch angeformte Stege 14 im Abstand von der Tragwand 13 gehalten. Die Stege 14 begrenzen die Kanäle einer Kanalstruktur 15, welche schraubenförmig umlaufen. Die Kanalstruktur 15 kann aus einem einzigen Kanal bestehen oder mehrgängig sein. Die Kanalstruktur 15 ist mit einer Porenstruktur 16 aus einem porösen oder geschäumten Material ausgefüllt. Diese offene Porenstruktur kann von dem Gas durchströmt werden. Die Innenwand 12 und die Tragwand 13 sind gasundurchlässig.

Am vorderen Rand 17 ist die Innenwand 12 nach außen umgeboen, um in eine Außenwand 12a überzugehen. Hinter dieser befindet sich ein um die Tragwand 13 umlaufender Verteilerkanal 18 mit einem Einlaß 19, welchem das kalte Gas zugeführt wird. Der Verteilerkanal 18 führt (im Längsschnitt gesehen) um den Rand 17 herum und mündet in die Kanalstruktur 15, um das kalte Gas in diese einzuleiten. An dem Rand 17 tritt die höchste Strahlungsdichte auf. Der Rand 17 ist daher besonders dazu geeignet, eine starke Vorerwärmung des Gases herbeizuführen. Die Außenfläche A wird im randnahen vorderen Bereich des Absorbersmoduls von der Außenwand 12a und dahinter von der Tragwand 13 gebildet. Die Kanalstruktur 15, die hier aus schraubenförmigen Kanälen besteht, kann auch als Labyrinth ausgebildet sein.

Vom Boden der tiegelförmigen Absorberwand 11 steht ein Fuß 20 ab, der hohl ausgebildet ist und in den die Kanalstruktur 15 mündet. Der Fuß 20 enthält ebenfalls eine Porenstruktur 21 aus Hochtemperaturkeramik. Er bildet den Auslaß 22, aus dem das unter Druck stehende heiße Gas abgeführt wird. Der Fuß 20 weist einen Flansch 23 auf, mit dem das Absorbermodul 10 an einer Haltestruktur befestigt werden kann.

Die vordere Öffnung 24, durch die die Solarstrahlung eintritt, ist offen und nicht durch ein Fenster bedeckt. Im Boden 25 hat die Innenwand 12 der Absorberwand 11 eine größere Stärke als im Umfangsbereich, weil am Boden 25 die Kanalstruktur 15 gerade ausläuft und in die Porenstruktur 21 des Fußes 20 mündet.

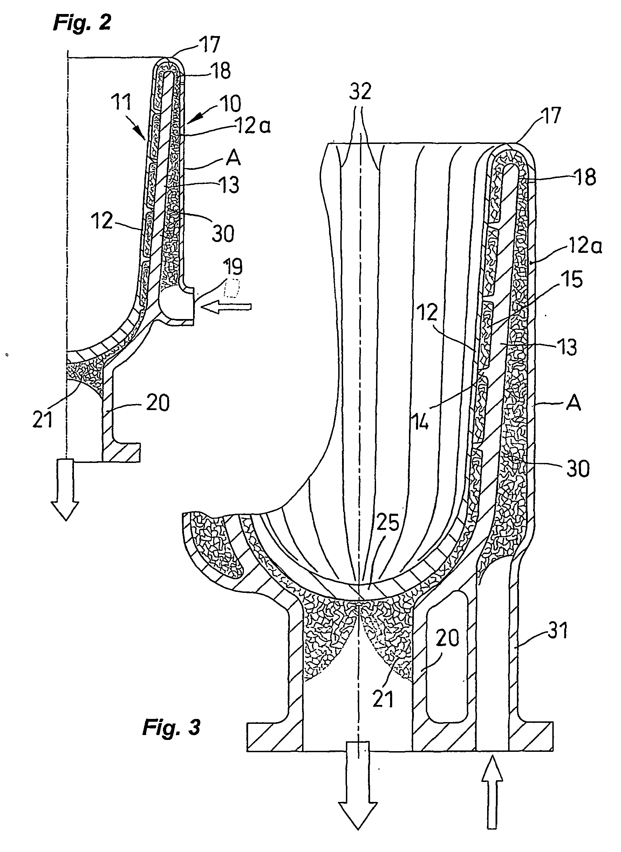

Bei dem Ausführungsbeispiel von Fig. 2 ist der Verteilerkanal 18, der am vorderen Rand 17 angeordnet ist, über einen umlaufenden Kanal 30, der an der Außenseite der Tragwand 13 verläuft, mit dem Einlaß 19 verbunden, welcher an der rückwärtigen Hälfte der axialen Länge der Absorberwand 11 angeordnet ist, also in der Nähe des Fußes 20. Dadurch, dass der Einlaß 19 zurückverlegt ist, fällt er in den Schattenbereich des geschlossenen Hochtemperatur-Solarabsorbers, so dass der Anschluss des Wärmeträgermediums an den Einlaß 19 materialtechnisch haltbar gestaltet werden kann. Der Kanal 30 ist hier ebenfalls mit einer schaumartigen Struktur gefüllt. Die Außenfläche A der Absorberwand besteht hier überwiegend aus der Außenwand 12a.

Bei dem Ausführungsbeispiel von Fig. 3 erstreckt sich der ringförmige Kanal 30 sogar bis zu dem Flansch 23, in welchem sich der Einlaß 19 befindet. Ein Rohrstück 31, das dem Fuß 20 und der Tragwand 13 einstückig angeformt ist, erstreckt sich von dem Flansch 23, um sich in dem Kanal 30 fortzusetzen.

Gemäß Figur 3 befinden sich die Stege 17, die die Kanäle der Kanalstruktur 15 trennen, an der Tragwand 13. Zur Verbesserung der Stabilität der Innenwand 12 und zur Vergrößerung der Strahlungsempfangsfläche des Absorbermoduls ist die Innenwand 12 mit sternförmig angeordneten Rippen 32 versehen.

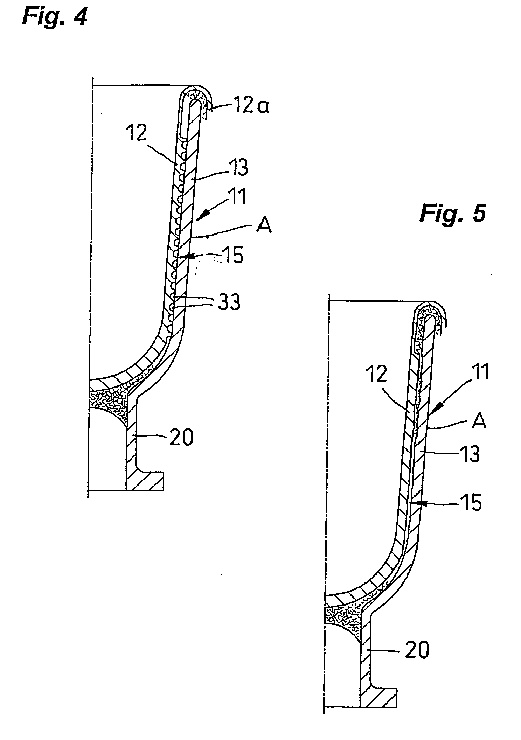

Bei dem Ausführungsbeispiel von Figur 4 besteht die Kanalstruktur 15 aus wendelförmigen Rillen 33, die der Innenwand 12 angeformt sind und ein mehrgängiges Gewinde bilden.

Bei dem Ausführungsbeispiel von Figur 5 ist die Kanalstruktur 15 zwischen der Innenwand 12 und der Tragwand 13 als freie Sinterstruktur ausgebildet, die offen ausgebildet oder mit einem porösen oder schaumartigen Material verfüllt ist.

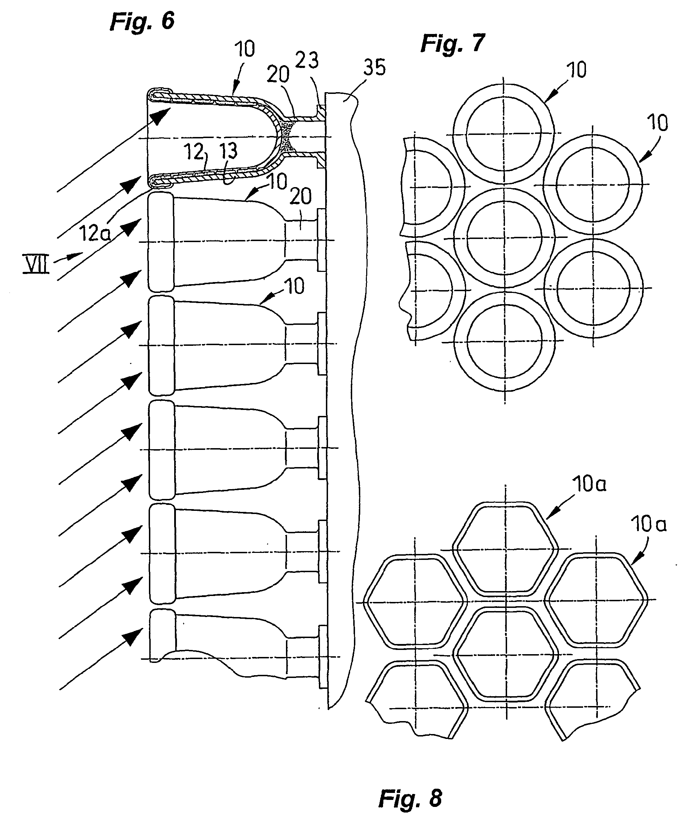

In den Figuren 6 und 7 ist dargestellt, wie mehrere Absorbermodule 10 zu einem Absorberfeld zusammengesetzt sind. Dabei sind die Absorbermodule in Figur 6 in Seitenansicht in einem (nicht dargestellten) Turmreceiver enthalten. Die Strahlung kommt wie üblich aus dem Heliostatfeld (Spiegelfeld) von unten. Die einfallende Strahlung verläuft schräg zu den horizontalen Achsen der Absorbermodule. Hierdurch wird gewährleistet, dass auch Strahlung auf die Außenwände 12a und die Tragwände 13 der Absorbermodule fällt. Die Absorbermodule bilden keine geschlossene Wand, sondern sie sind mit gegenseitigen Abständen angeordnet. Ferner ist jedes Absorbermodul 10 mit seinem Fuß 20 bzw. mit dem Flansch 23, an einer Haltestruktur 35 frei abstehend nach Art eines Auslegers befestigt. In der Haltestruktur 35 befinden sich auch die Zu- und Ableitungen für das wärmeübertragende Fluid.

Gemäß Figur 7 sind die Absorbermodule 10 in horizontalen Reihen angeordnet, wobei die Module zweier benachbarter Reihen jeweils auf Lücke angeordnet sind, so dass sich insgesamt eine Sechserstruktur ergibt, bei der jeweils sechs Module ringförmig um ein zentrales Modul angeordnet sind.

In Figur 8 ist eine entsprechende Anordnung sechseckiger Module 10a dargestellt. Auch hier sind zwischen den Modulen Zwischenräume enthalten. Alternativ können die Module auch rechteckige Gestaltung haben. Bei rechteckiger Gestaltung ist die Anordnung im technischen Grundaufbau eines zylinderartigen Turmreceivers besonders vorteilhaft.

## Patentansprüche

1. Hochtemperatur-Solarabsorbermodul mit einer der einfallenden Strahlung ausgesetzten tiegelförmigen Absorberwand (11), die als Hohlwand ausgebildet ist, eine Tragwand (13) und eine dem Tiegelinneren zugewandte Innenwand (12) aufweist und eine Kanalstruktur (15) zum konvektiven Aufheizen eines Gases enthält, wobei mindestens ein Teil der zum Tiegeläußeren gerichteten Außenfläche (A) der Absorberwand (11) unbedeckt und einer schräg zur Tiegelachse einfallenden Strahlung ausgesetzt ist,
**dadurch gekennzeichnet,**
**dass** die Absorberwand (11) eine mindestens einen Teil der Tragwand (13) bedeckende Außenwand (12a) aufweist.

2. Hochtemperatur-Solarabsorbermodul nach Anspruch 1, **dadurch gekennzeichnet, dass** die Innenwand (12) und die Außenwand (12a) jeweils eine geringere Stärke haben als die Tragwand (13).

3. Hochtemperatur-Solarabsorbermodul nach Anspruch 1 oder 2, **dadurch gekennzeichnet, dass** die Absorberwand (11) ausschließlich aus Hochtemperatur-Keramik besteht.

4. Höchtemperatur-Solarabsorbermodul nach einem der Ansprüche 1-3, **dadurch gekennzeichnet, dass** ein Verteilerkanal (18) vorgesehen ist, der in mehrere Kanäle der Kanalstruktur (15) einmündet, welche im Innern der Absorberwand (11) bis zu einem am Tiegelboden (25) vorgesehenen gemeinsamen Auslass (22) führen.

5. Hochtemperatur-Sotarabsorbermodul nach einem der Ansprüche 1-4, **dadurch gekennzeichnet, dass** die Kanäle der Kanalstruktur (15) in der Absorberwand (11) in Umfangsrichtung verlaufen.

6. Hochtemperatur-Solarabsorbermodul nach Anspruch 4, **dadurch gekennzeichnet, dass** der Verteilerkanal (18) einen Einlass (19) aufweist, der in der rückwärtigen Hälfte der axialen Länge der Absorberwand (11) angeordnet ist.

7. Hochtemperatur-Solarabsorbermodul nach einem der Ansprüche 1-6, **dadurch gekennzeichnet, dass** die tiegelförmige Absorberwand (11) einen von ihrem Boden (25) axial abstehenden Fuß (20) aufweist, durch den der Auslass (22) der Kanalstruktur (15) verläuft.

8. Hochtemperatur-Solarabsorbermodul nach einem der Ansprüche 1-7, **dadurch gekennzeichnet, dass** die Kanalstruktur (15) und/oder der Auslass (22) eine Porenstruktur (21) enthält.

9. Hochtemperatur-Solärabsorbermodul nach Anspruch 8, **dadurch gekennzeichnet, dass** die Absorberwand (11) einschließlich der Porenstruktur (21) aus einem einstückigen Keramikteil besteht.

10. Hochtemperatur-Solarabsorber, **dadurch gekennzeichnet, dass** mehrere tiegelförmige Hochtemperatur-Solarabsorbermodule (10) nach einem der Ansprüche 1-9 an einer Haltestruktur (35) frei abstehend befestigt sind, wobei die Absorbermodule (10) berührungsfrei mit gegenseitigen Abständen angeordnet sind.

## Claims

1. A high-temperature solar absorber module comprising a cup-shaped absorber wall (11) exposed to the incident radiation, said absorber wall (11) being formed as a hollow wall and including a supporting wall (13) and an inner wall (12) facing towards the interior of the cup, and further including a channel structure (15) for the convective heating of a gas, wherein at least a part of the outer face (A) of the absorber wall (11) facing towards the exterior of the cup is unshielded and exposed to radiation incident obliquely to the cup axis,
**characterized in**
**that** said absorber wall (11) comprises an outer wall (12a) covering at least a part of the supporting wall (13).

2. The high-temperature solar absorber module according to claim 1, **characterized in that** the inner wall (12) and the outer wall (12a) each have a smaller thickness than the supporting wall (13).

3. The high-temperature solar absorber module according to claim 1 or 2, **characterized in that** the absorber wall (11) is comprised exclusively of high-temperature ceramics.

4. The high-temperature solar absorber module according to any one of claims 1 to 3, **characterized in that** a distributor channel (18) is provided, arranged to enter a plurality of channels of the channel structure (15) which internally of the absorber wall (11) lead into a common outlet (22) provided at the bottom (25) of the cup.

5. The high-temperature solar absorber module according to any one of claims 1 to 4, **characterized in that** the channels of the channel structure (15) in the absorber wall (11) extend in the circumferential direction.

6. The high-temperature solar absorber module according to claim 4, **characterized in that** the distributor channel (18) comprises an inlet (19) arranged in the rear half of the axial length of the absorber wall (11).

7. The high-temperature solar absorber module according to any one of claims 1 to 6, **characterized in that** the cup-shaped absorber wall (11) is provided with a foot (20) axially extending from the bottom (25) of the absorber wall (11) and having the outlet (22) of the channel structure (15) passing therethrough.

8. The high-temperature solar absorber module according to any one of claims 1 to 7, **characterized in that** the channel structure (15) and/or the outlet (22) comprises a porous structure (21).

9. The high-temperature solar absorber module according to claim 8, **characterized in that** the absorber wall (11) inclusive of the porous structure (21) is provided as a one-pieced ceramic portion.

10. A high-temperature solar absorber, **characterized in that** a plurality of cup-shaped high-temperature solar absorber modules (10) according to any one of claims 1 to 9 are mounted in a cantilevered manner to a holding structure (35), the absorber modules (10) being arranged in a noncontacting, mutually spaced configuration.

## Revendications

1. Module d'absorbeur solaire haute température, comprenant une paroi d'absorbeur (11) en forme de creuset exposée au rayonnement incident, réalisée sous forme de paroi creuse, une paroi de support (13) et une paroi intérieure (12) tournée vers l'intérieur du creuset et contenant une structure de canal (15) pour le chauffage par convection d'un gaz, au moins une partie de la surface extérieure (A) de la paroi d'absorbeur (11) tournée vers l'extérieur du creuset étant non recouverte et exposée à un rayonnement incident oblique par rapport à l'axe du creuset,
**caractérisé en ce que**
la paroi d'absorbeur (11) présente une paroi extérieure (12a) recouvrant au moins une partie de la paroi de support (13).

2. Module d'absorbeur solaire haute température selon la revendication 1,
**caractérisé en ce que**
la paroi intérieure (12) et la paroi extérieure (12a) possèdent respectivement une épaisseur plus faible que la paroi de support (13).

3. Module d'absorbeur solaire haute température selon la revendication 1 ou 2,
**caractérisé en ce que**
la paroi d'absorbeur (11) se compose exclusivement de céramique haute température.

4. Module d'absorbeur solaire haute température selon l'une des revendications 1 à 3,
**caractérisé en ce qu'**
on prévoit un canal de distribution (18) qui débouche dans plusieurs canaux de la structure de canal (15), qui conduisent à l'intérieur de la paroi d'absorbeur (11) jusqu'à une sortie commune (22) prévue au niveau du fond du creuset (25).

5. Module d'absorbeur solaire haute température selon l'une des revendications 1 à 4,
**caractérisé en ce que**
les canaux de la structure de canal (15) s'étendent dans la direction périphérique dans la paroi de l'absorbeur (11).

6. Module d'absorbeur solaire haute température selon la revendication 4,
**caractérisé en ce que**
le canal de distribution (18) présente une entrée (19) disposée dans la moitié arrière de la longueur axiale de la paroi d'absorbeur (11).

7. Module d'absorbeur solaire haute température selon l'une des revendications 1 à 6,
**caractérisé en ce que**
la paroi d'absorbeur (11) en forme de creuset présente un pied (20) dépassant axialement de son fond (25), à travers lequel s'étend la sortie (22) de la structure de canal (15).

8. Module d'absorbeur solaire haute température selon l'une des revendications 1 à 7,
**caractérisé en ce que**
la structure de canal (15) et/ou la sortie (22) contient une structure poreuse (21).

9. Module d'absorbeur solaire haute température selon la revendication 8,
**caractérisé en ce que**
la paroi d'absorbeur (11), avec la structure poreuse (21), se compose d'une pièce en céramique faite d'une seule pièce.

10. Absorbeur solaire haute température,
**caractérisé en ce que**
plusieurs modules d'absorbeur solaire haute température (10) en forme de creuset selon l'une des revendications 1 à 9 sont fixés à une structure de support (35) en dépassant librement de celle-ci, les modules d'absorbeur (10) étant disposés à une certaine distance les uns des autres sans se toucher.
